# EUROPEAN PATENT APPLICATION

(11) **EP 2 369 492 A1**
(43) Date of publication of application: **28.09.2011**
(21) Application number: 08878735.3
(22) Date of filing: 11.12.2008
(51) Int. Cl.: G06F 17/30

(54) **CONFIGURATION MANAGEMENT DEVICE, CONFIGURATION MANAGEMENT PROGRAM, AND METHOD**

(71) Applicant: Fujitsu Limited, Kawasaki-shi, Kanagawa 211-8588 (JP)
(72) Inventor: WADA, Yuji, Kawasaki-shi Kanagawa 211-8588 (JP); MATSUMOTO, Yasuhide, Kawasaki-shi Kanagawa 211-8588 (JP); MATSUBARA, Masazumi, Kawasaki-shi Kanagawa 211-8588 (JP); MORIMOTO, Kenji, Tokyo 1130001 (JP); OTSUKA, Hiroshi, Kawasaki-shi Kanagawa 211-8588 (JP)
(74) Representative: HOFFMANN EITLE
(86) International application number: PCT/JP2008/072509
(87) International publication number: WO 2010/067436

(57) **Abstract**

A configuration management device includes: an update processing unit 102 for storing, as cache information, identification information included in each of a plurality of CIs managed by an MDR 20 associated with origin information which is the information indicating the position of a configuration item including the identical identification information; a request processing unit 101 for accepting a search request including a search condition; and a search processing unit 103 for acquiring a CI indicated by the origin information in the cache information 104 from the MDR 20 when the search request is accepted, merging the acquired CI with the CIs associated with the identical origin information in the cache information 104, determining whether or not a result of the merge satisfies the search condition, and returning as a response the result of the merge determined as satisfying the search condition.

## Description

### Technical Field

The present invention relates to the technology of managing the attribute information about the resources configuring a system.

### Background Art

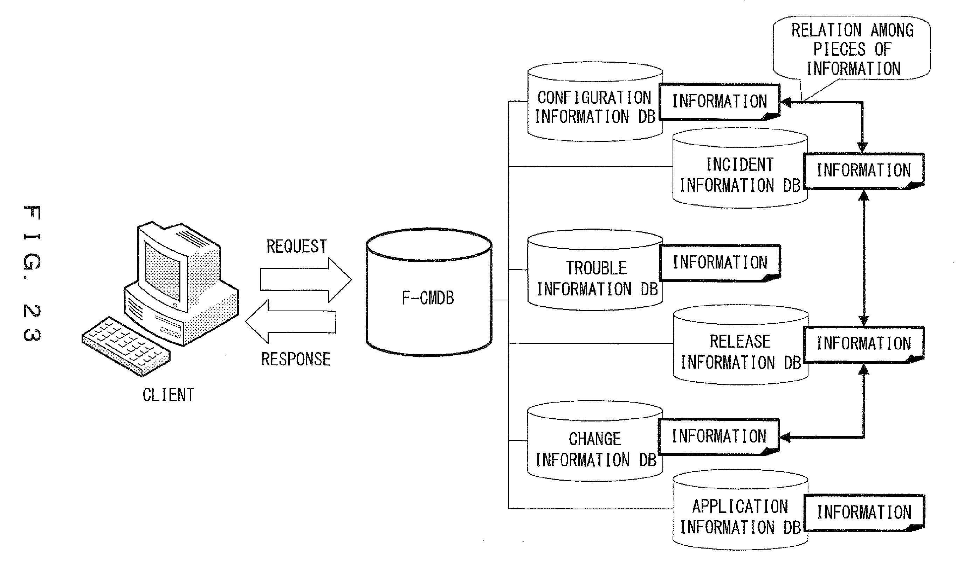

An F-CMDB (federated configuration management database) is well known as a database for managing the entire information about the components of an information system by virtually integrating different databases for managing the information about the hardware and the software configuring the system. The F-CMDB enables a plurality of virtually integrated databases including a configuration information DB, an incident information DB, a trouble information DB, a release information DB, a change information DB, and application information DB to be freely operated as illustrated in FIG. 23. Each of the plurality of integrated databases manages the relationship between a CI (configuration item) as the attribute information about resources (equipment, software, etc.) configuring a system and the information.

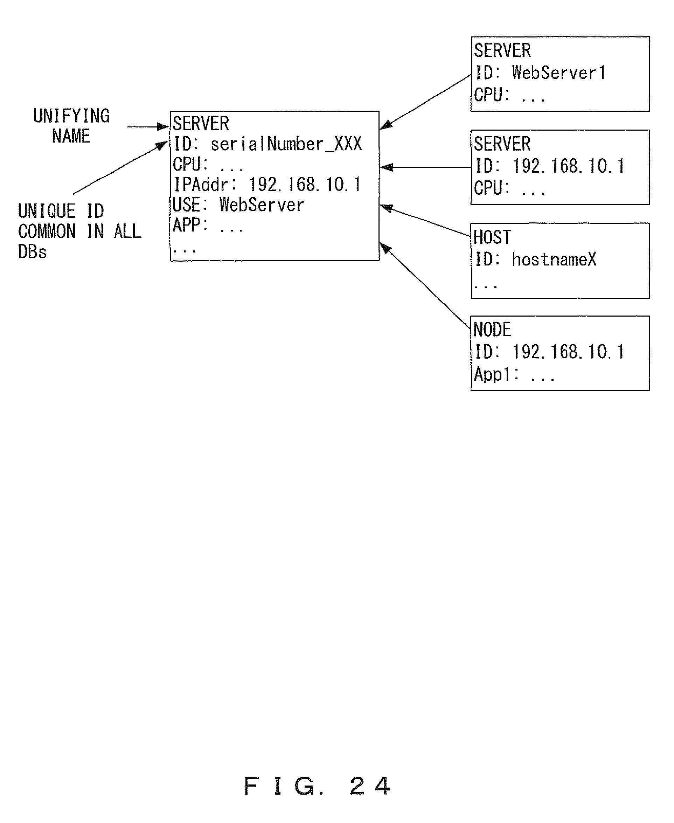

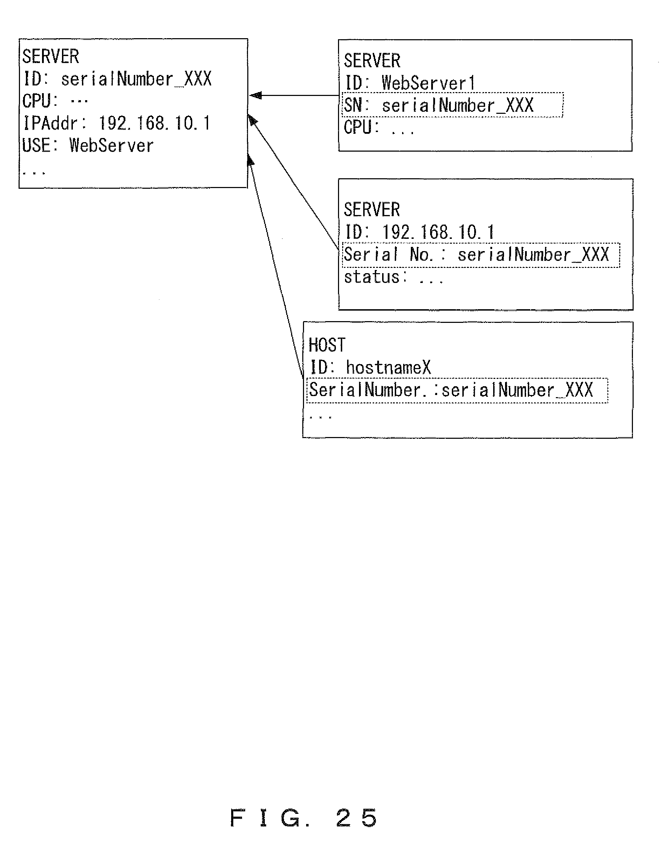

Furthermore, as illustrated in FIG. 24, the F-CMDB has a reconciliation function of unifying the names for the information about the same item managed with a different name and a different local ID for each of the virtually integrated databases, and managing a unique ID commonly used in all virtually integrated databases, thereby performing the reconciliation of information. In the reconciliation function, the identifying property as illustrated in FIG. 25 is used as the information for association of an entity (CI and relationship). The identifying property is attribute information uniquely associated with resources such as a serial number, an IP address, a Mac address, etc.

In addition, in response to the search request for the resources satisfying a predetermined condition by a client as illustrated in FIG. 23, the F-CMDB holds a result of performing a reconciliation (reconciliation information) in advance, and performs a search according to the reconciliation information. When the held entity is updated (registered, changed, or deleted), the virtually integrated database notifies the F-CMDB of the update. The F-CMDB performs the reconciliation again to reflect the updated entity by the result of the reconciliation.

In addition, well known as the prior art related to the present invention is a database integration support method in an integrating system among the databases of a plurality of systems for associating the attribute items in the table of a plurality of different databases, generating a mapping document based on the association, and associating the attribute values in the tag table based on the generated mapping document, thereby supporting the integration of the plurality of databases according to the association (refer to the patent document 1, for example).
Patent Document 1: Japanese Laid-open Patent Publication No. 2003-44529

### Disclosure of Invention

As described above, the F-CMDB holds a result of the reconciliation to improve the search performance. On the other hand, it is preferable that the F-CMDB does not manage a result of the reconciliation from the viewpoint of scalability. However, to improve the scalability, when the F-CMDB does not perform the reconciliation in advance, the procedure of searching for an entity satisfying the condition becomes complicated, thereby causing the problem of the degradation of search performance.

The present invention has been developed to solve the above-mentioned problem, and aims at performing a configuration management device, a configuration management program, and a method for realizing both scalability and search performance.

To solve the above-mentioned problems, a configuration management device which is able to communicate with a device that manages a plurality of configuration items of a system, and the configuration management device includes: a management unit for associating identification information about the resources included in each of the plurality of configuration items managed by the equipment unit with position information indicating the position of a configuration item including identical identification information as the identification information, and storing associated information as management information in a storage unit; a search acceptance unit for accepting a search request including a search condition; an acquisition unit for acquiring from the equipment unit the configuration item indicated by the position information in the management information when the search request is accepted by the search acceptance unit; a merge unit for merging configuration items associated with the same identification information in the management information for the configuration item acquired by the acquisition unit; a determination unit for determining whether or not a result of the merge by the merge unit satisfies the search condition accepted by the search acceptance unit; and a response unit for returning the result of the merge determined by the determination unit as satisfying the search condition as a response to the search request accepted by the search acceptance unit.

A program that causes a computer, which is able to communicate with a device that manages a plurality of configuration items of a system, to perform a process, the process including: a managing step of associating identification information about the resources included in each of the plurality of configuration items managed by the equipment unit with position information indicating the position of a configuration item including identical identification information as the identification information, and storing associated information as management information in a storage unit; a search accepting step of accepting a search request including a search condition; an acquiring step of acquiring from the equipment unit the configuration item indicated by the position information in the management information when the search request is accepted in the search accepting step; a merging step of merging configuration items associated with the same identification information in the management information for the configuration item acquired by the acquiring step; a determining step of determining whether or not a result of the merge in the merging step satisfies the search condition accepted in the search accepting step; and a response step of returning the result of the merge determined in the determining step as satisfying the search condition as a response to the search request accepted in the search accepting step.

A configuration managing method used in a device which is able to communicate with a plurality of configuration items of a system, the configuration managing method includes: a managing step of associating identification information about the resources included in each of the plurality of configuration items managed by the equipment unit with position information indicating the position of a configuration item including identical identification information as the identification information, and storing associated information as management information in a storage unit; a search accepting step of accepting a search request including a search condition; an acquiring step of acquiring from the equipment unit the configuration item indicated by the position information in the management information when the search request is accepted in the search accepting step; a merging step of merging configuration items associated with the same identification information in the management information for the configuration item acquired by the acquiring step; a determining step of determining whether or not a result of the merge in the merging step satisfies the search condition accepted in the search accepting step; and a response step of returning the result of the merge determined in the determining step as satisfying the search condition as a response to the search request accepted in the search accepting step.

### Brief Description of Drawings

FIG. 1 is a configuration of a configuration management system according to the embodiment 1;
FIG. 2 is a block diagram of the configuration of an F-CMDB and an MDR according to the embodiment 1;
FIG. 3 illustrates cache information;
FIG. 4 illustrates a CI in configuration information;
FIG. 5 is a flowchart of the operation of the request processing unit;
FIG. 6 is a flowchart of the operation of the scalability improving process;
FIG. 7 is a flowchart of the operation of the updating unit;
FIG. 8 is a flowchart of the operation of the registering and adding process;
FIG. 9 is an example of registering the origin information in the registering and adding process;
FIG. 10 is an example of adding the origin information in the registering and adding process;
FIG. 11 is a flowchart of the operation of the deleting process;
FIG. 12 is an example of deleting the origin information in the deleting process when there are plural pieces of origin information;
FIG. 13 is an example of deleting the origin information in the deleting process when there are not plural pieces of origin information;
FIG. 14 is a flowchart of the operation of the searching process;
FIG. 15 illustrates an entity satisfying the search condition;
FIG. 16 illustrates an entity not satisfying the search condition;
FIG. 17 is a configuration of a configuration management system according to the embodiment 2;
FIG. 18 is a configuration of an F-CMDB, an MDR, and a proxy according to the embodiment 2;
FIG. 19 illustrates proxy information;
FIG. 20 is a flowchart of the operation of the arrangement determination unit;
FIG. 21 is a flowchart of the operation of the arrangement determining process;
FIG. 22 is an example of the computer system according to the present invention;
FIG. 23 illustrates a conventional F-CMDB;
FIG. 24 illustrates the reconciliation function; and
FIG. 25 illustrates an identifying property.

### Best Mode for Carrying Out the Invention

The embodiment of the present invention is described below with reference to the attached drawings.

### Embodiment 1

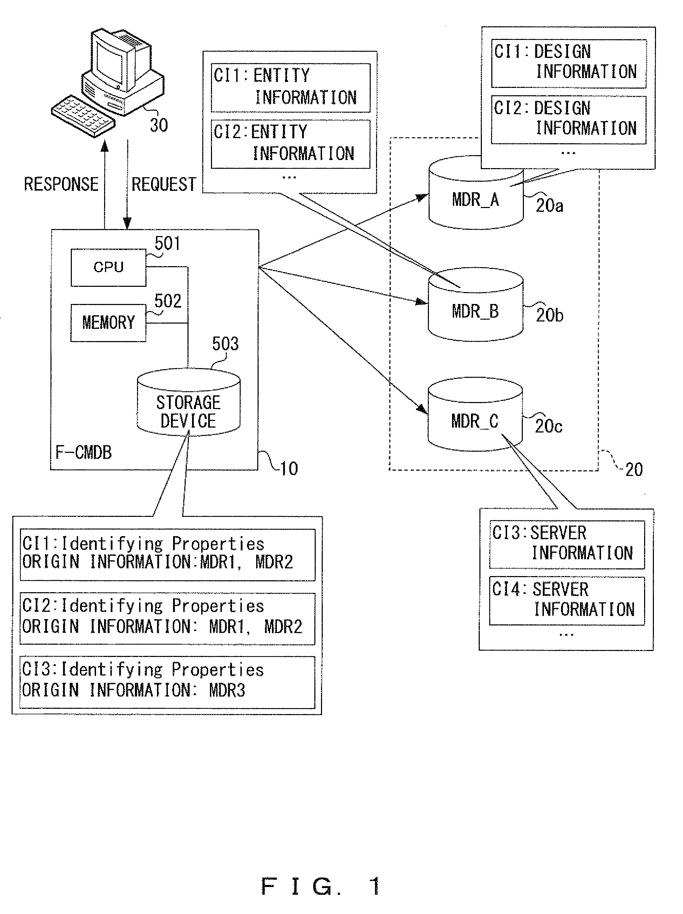

First, the configuration of the configuration management system according to the present embodiment is described. FIG. 1 is a configuration of a configuration management system according to the embodiment 1.

As illustrated in FIG. 1, the configuration management system according to the present embodiment is configured by an F-CMDB (configuration management device) 10, and a plurality of MDRs (management data repositories) 20 (MDR_A20a, MDR_B20b, MDR_C20c) connected to the F-CMDB 10. A client PC 30 is connected to the F-CMDB 10. A plurality of MDRs 20 manage the attribute information (information, CI, and relationship about the resources) about the resources in the configuration management system whose configurations are managed by the system. In the F-CMDB 10, the attribute information about the resources held by the plurality of MDRs 20 is virtually integrated. In addition, in the F-CMDB 10 a search request is received from the client PC 30 as a request, and a result of the search is returned as a response to the client PC 30. The F-CMDB 10 is a server including as hardware at least a CPU 501, memory 502, and a storage device 503. The storage device 503 can be an external storage device connected to a server.

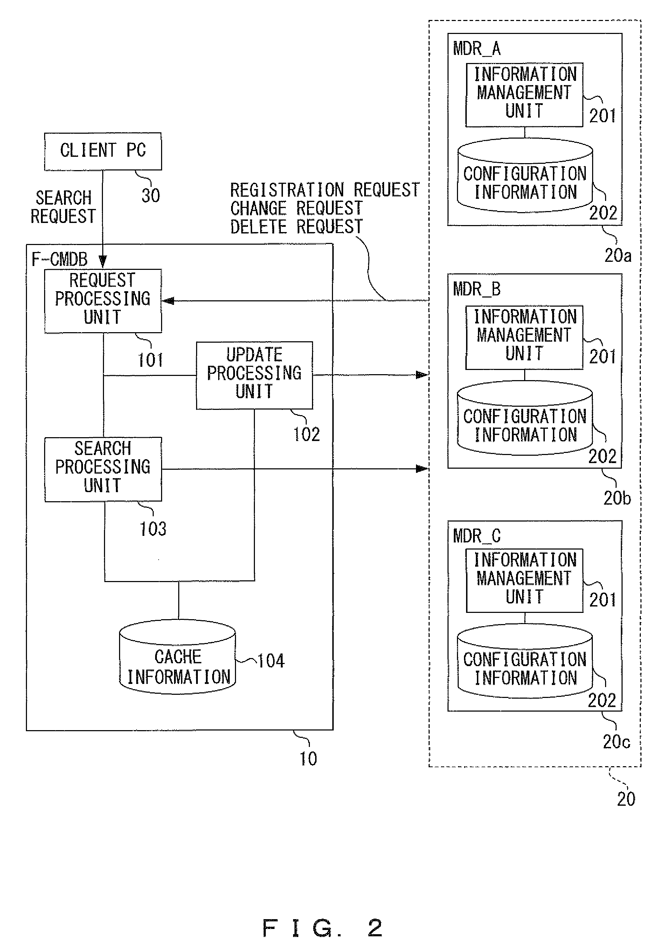

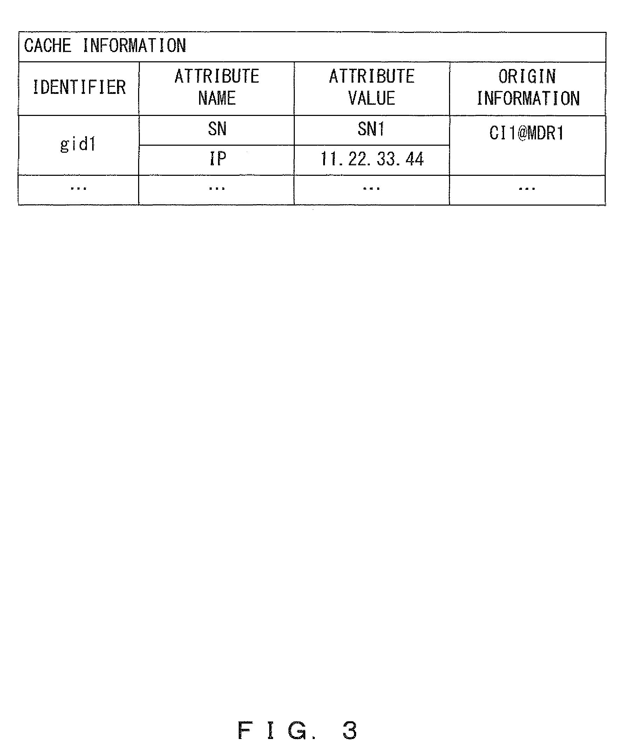

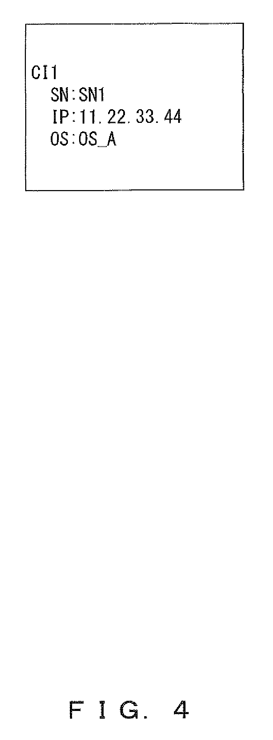

Described next is the configuration of the F-CMDB and the MDR according to the present embodiment. FIG. 2 is a block diagram of the configuration of an F-CMDB and an MDR according to the embodiment 1. FIG. 3 illustrates cache information. FIG. 4 illustrates a CI in configuration information.

As illustrated in FIG. 2, the F-CMDB 10 includes the request processing unit 101 (search acceptance unit, update acceptance unit), the update processing unit 102 (management unit), the search processing unit 103 (acquisition unit, merge unit, determination unit, response unit), the cache information 104 (management information). The request processing unit 101, the update processing unit 102, and the search processing unit 103 are functions realized by the CPU 501 and the memory 502, and the cache information 104 is stored in the storage device 503. The request processing unit 101 accepts a search request by the client PC 30 and updates requests (registration requests, change requests, delete requests) by the plurality of MDRs 20, and allocates the accepted processes to the update processing unit 102 or the search processing unit 103. The update processing unit 102 performs the process in response to the update request. The search processing unit 103 performs the process in response to the search request. The cache information 104 is associated with the attribute name and the attribute value of the identifying property (hereinafter referred to as an IDP) as unique identification information for the resources, and the origin information indicating the place of the IDP as illustrated in FIG. 3, and a gid (global ID) as a unique identifier is added to them.

Each of the plurality of MDRs 20 includes the configuration information 202 and the information management unit 201 for managing the configuration information 202. The information management unit 201 is substantially realized by a CPU and memory, and the configuration information 202 is attribute information about the resources stored in a storage device. When the configuration information 202 is updated, the information management unit 201 issues an update request to the F-CMDB 10. The update request is an update request of the cache information 104 depending on the registration, change, or delete of the attribute information (hereinafter referred to as an entity) about the resources managed in each of the plurality of MDRs 20. The configuration information 202 includes a CI as attribute information about the resources as illustrated in FIG. 4. The CI includes the information indicating the parameters such as the CPU, the OS, the HDD, etc. in addition to the attribute information (serial number, IP) as an IDP.

In the present embodiment, the update request is issued as "request type, name of updated entity, information about the location of the entity 'position information'". For example, when the CI 3 is newly registered as the configuration information 202 about MDR_A 20a, the update request from the MDR_A 20a is "registration, CI3@MDR_A". The type of the update request is any of registration, change, and delete. A search request is issued as "type of request, search condition". For example, when the resources whose hard disk is 500 GB is searched for, the search request is "search, HDD=500 GB".

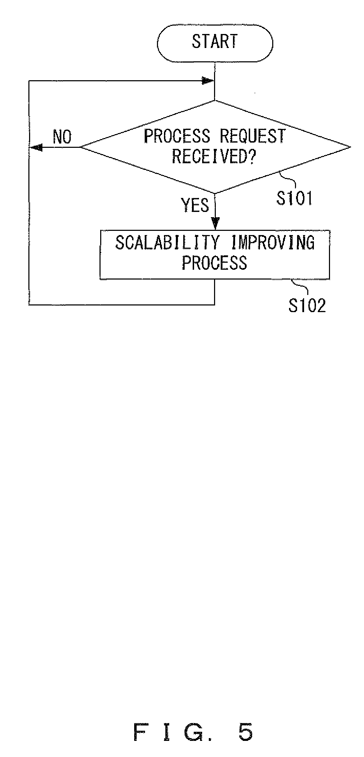

Described next is the operation of the request processing unit in the F-CMDB. FIG. 5 is a flowchart of the operation of the request processing unit.

As illustrated in FIG. 5, the request processing unit 101 first determines whether or not a process request has been received (S101). When the process request is received (YES in S101), the request processing unit 101 performs the scalability improving process described later (S102). Then it determines again whether or not the process request has been received (S101).

On the other hand if the process request has not been received (NO in S101), the request processing unit 101 determines again whether or not the process request has been received (S101).

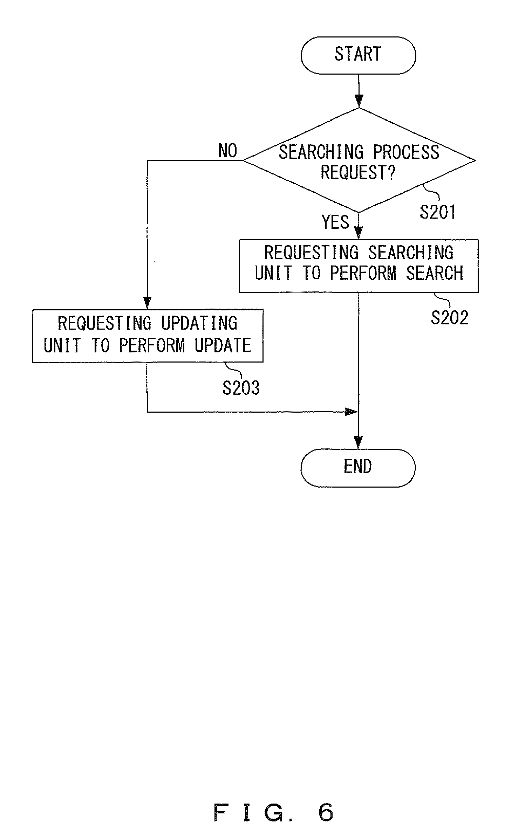

Described next is the scalability improving process. FIG. 6 is a flowchart of the operation of the scalability improving process. In the flowchart, the request processing unit it is assumed that the request processing unit has already received the process request (search accepting step, update accepting step).

As illustrated in FIG. 6, the request processing unit 101 determines whether or not the received process request is a searching process request (S201).

If the received process request is a searching process request (YES S201), the information management unit 201 requests the search processing unit 103 to perform the search (S202).

On the other hand, if the received process request is not a searching process request, that is, if the process request is an update process request (NO in S201), the request processing unit 101 requests the update processing unit 102 to perform the update (S203).

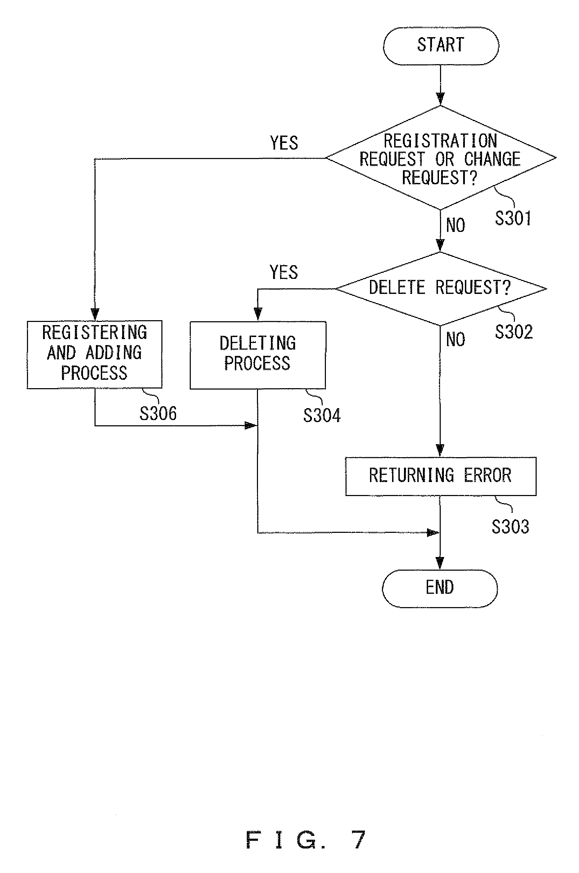

Described next is the operation of the updating unit. FIG. 7 is a flowchart of the operation of the updating unit. In the flowchart, it is assumed that the updating unit has already received an update request.

As illustrated in FIG. 7, the update processing unit 102 determines whether the type of the update request is a registration request or a change request (managing step in S301).

If the type of the update request is not a registration request or a change request (NO in S301), the update processing unit 102 determines whether or not the type of the update request is a delete request (managing step in S302).

If the type of the update request is not a delete request (NO in S302), the update processing unit 102 returns a error response to the MDR, among the plurality of MDRs 20, which issues an update request to the request processing unit 101 (S303).

On the other hand, when the type of the update request is a delete request (YES in S302), the update processing unit 102 performs the deleting process described later (managing step in S304).

If the type of update request is a registration request or a change request in step S301 (YES in S301), the update processing unit 102 performs the registering and adding process described later (managing step in S306).

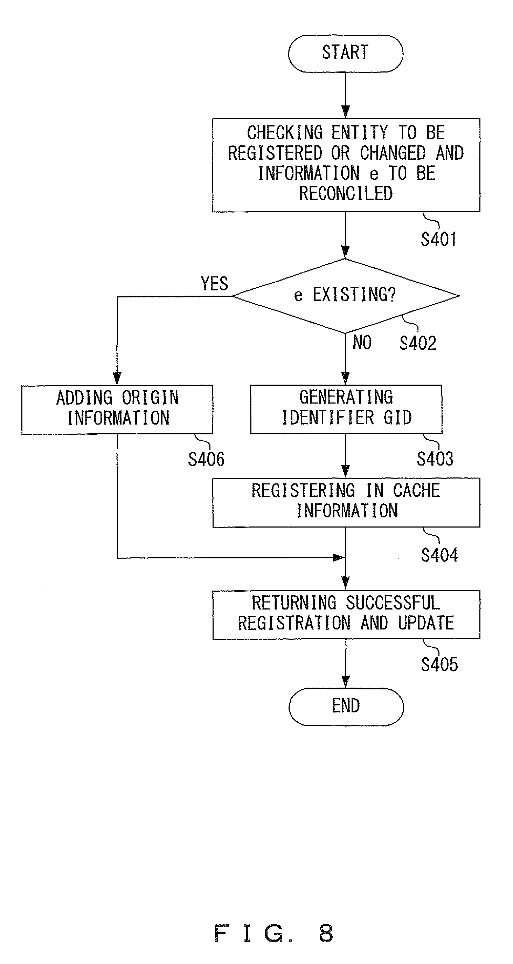

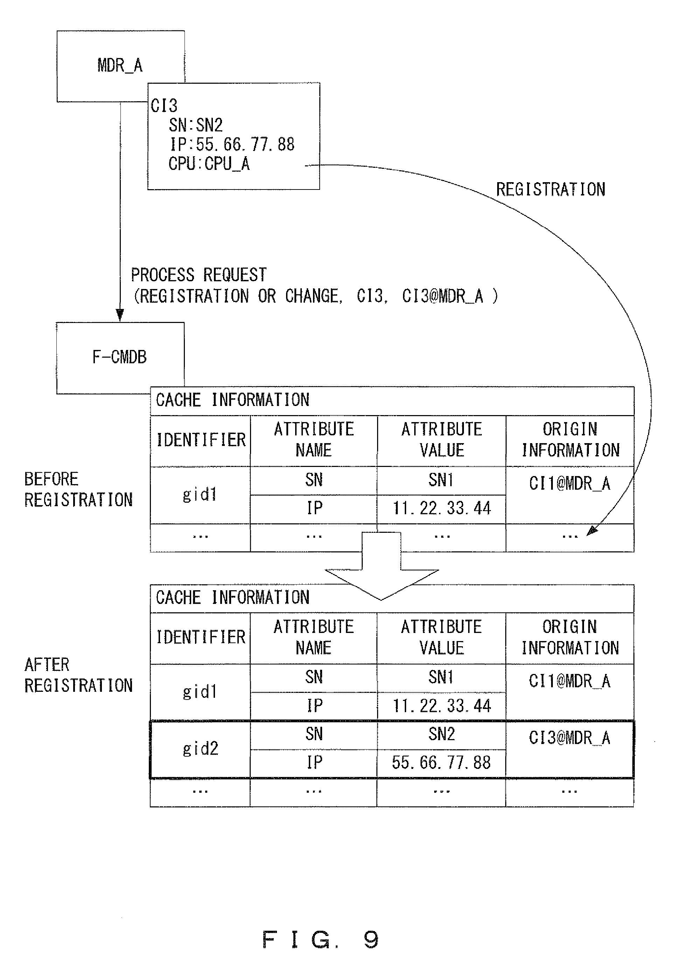

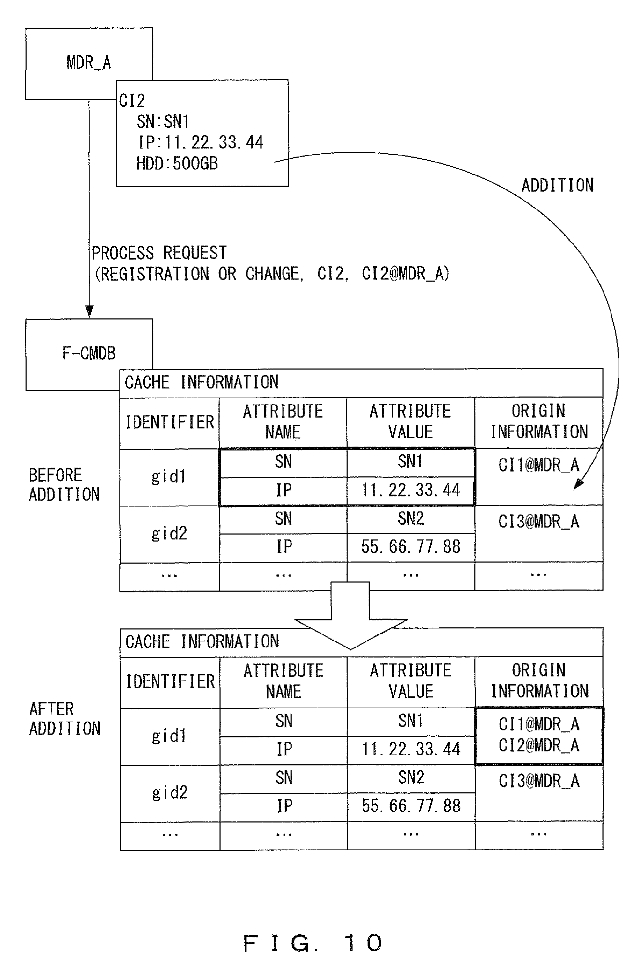

Described next is the operation of the registering and adding process. FIG. 8 is a flowchart of the operation of the registering and adding process. FIG. 9 is an example of registering the origin information in the registering and adding process. FIG. 10 is an example of adding the origin information in the registering and adding process.

As illustrated in FIG. 8, the update processing unit 102 checks the entity to be registered or changed and the information e to be reconciled (managing step in S401). Practically, in the cache information 104, the information having the same IDP as the entity to be registered or changed is checked.

Next, the update processing unit 102 determines whether or not there is information e to be reconciled in the cache information 104 (managing step in S402).

When there is no information e in the cache information 104, that is, when the origin information indicating an entity is to be registered (NO in S402), the update processing unit 102 generates a gid as a new identifier in the cache information 104 (S403). Furthermore, the update processing unit 102 registers the IDP of the entity in the cache information 104 (managing step in S404), and returns a response of successful registration and update to the MDR which has issued an update request (S405).

Described below is an example of the process performed when the origin information indicating the entity which has issued the update request is to be registered. As illustrated in FIG. 9, when a registration request or a change request is issued on the CI 3, the update processing unit 102 determines whether or not there is the same IDP as the CI 3 in the cache information 104. Since there is not the same IDP as the CI 3 in the cache information 104 illustrated in FIG. 9, the entity is regarded as a registration target, and is associated with the newly generated gid 2, and registered in the cache information 104. In this case, the IDP (SN1, 55.66.77.88) of the CI 3, the identifier (CI 3) of the entity, and the origin information (CI3@MDR_A) as the information about the location of the entity are registered in the cache information 104.

In addition, in step S402, when there is the information e in the cache information 104, that is, the origin information indicating the entity is to be added (YES in S402), the update processing unit 102 adds the origin information about the entity to the cache information 104 (managing step in S406), and returns a successful registration or change as a response to the MDR which has issued an update request (S405).

Described below is an example of the process performed when the origin information about the update-requested entity is to be added. As illustrated in FIG. 10, when a registration request or a change request is issued on the CI 2, the update processing unit 102 determines whether or not there is the same IDP as the CI 2 in the cache information 104. Since there is the same IDP as the CI 2 in the cache information 104 illustrated in FIG. 9, it is assumed that the origin information indicating the entity is to be added, and the origin information about the CI 2 is added to the gid 1.

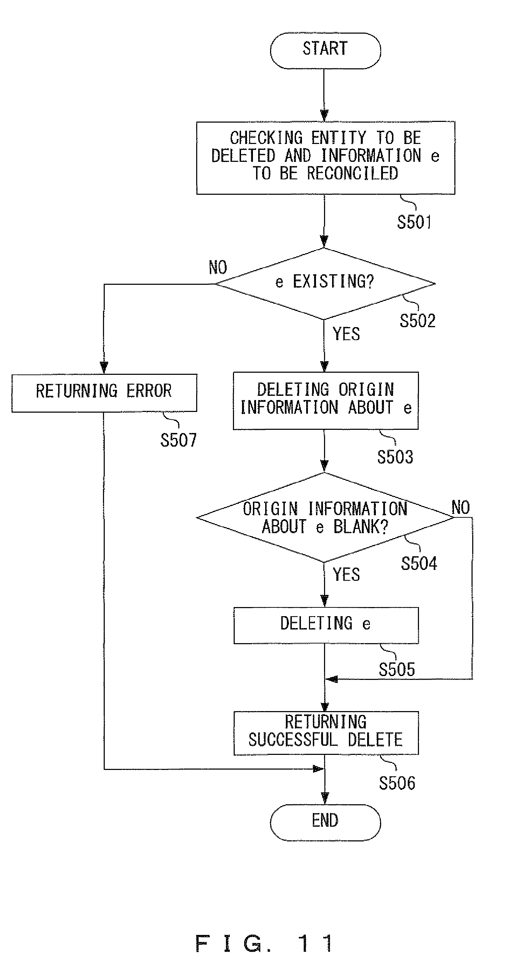

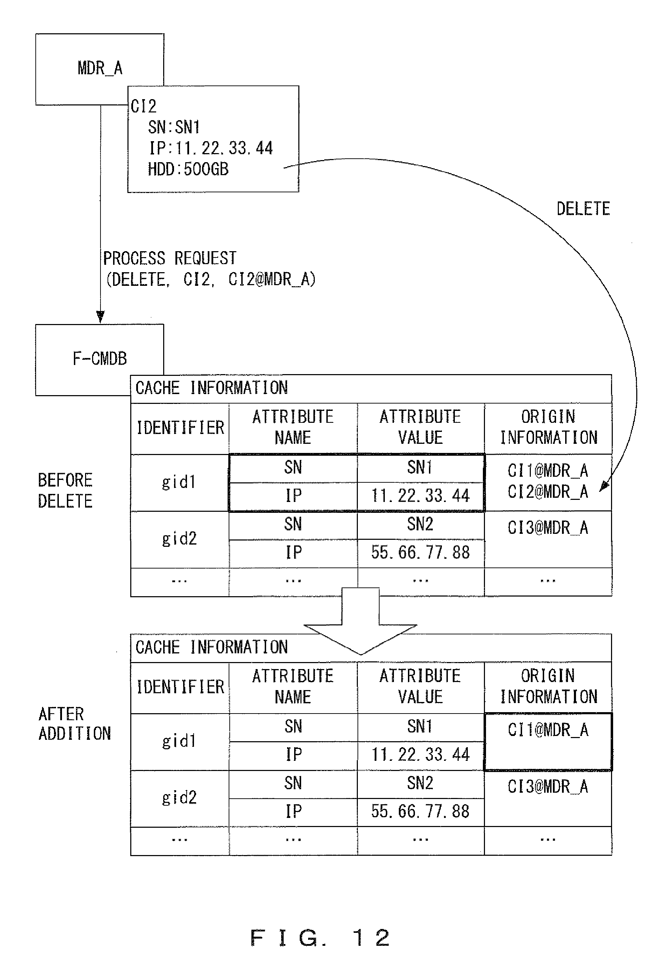

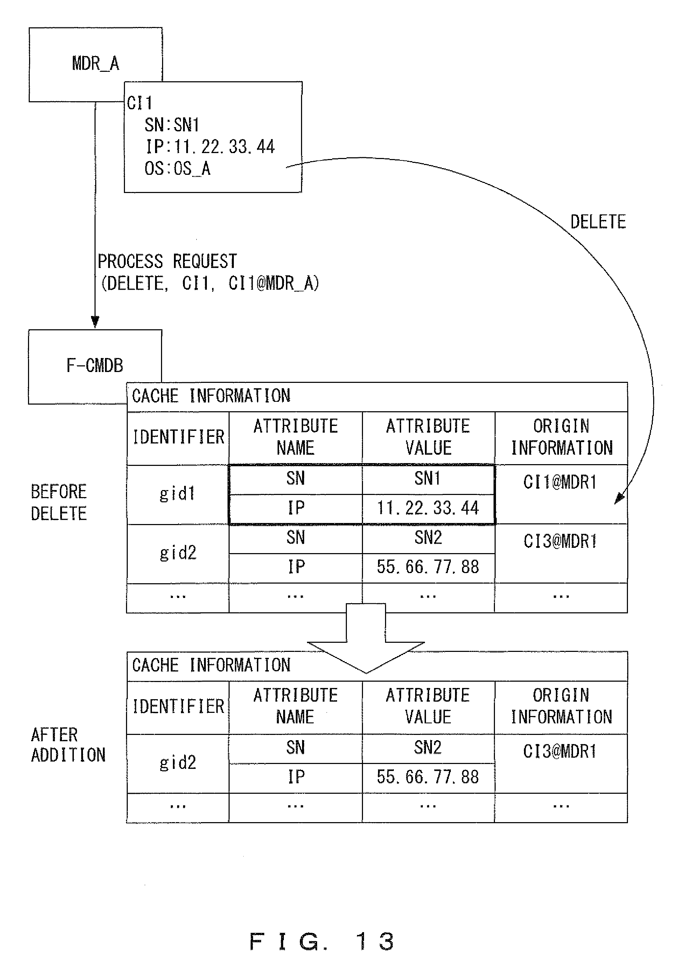

Described next is the operation of the deleting process. FIG. 11 is a flowchart of the operation of the deleting process. FIG. 12 is an example of deleting the origin information in the deleting process when there are plural pieces of origin information. FIG. 13 is an example of deleting the origin information in the deleting process when there are not plural pieces of origin information.

As illustrated in FIG. 11, the update processing unit 102 checks the entity to be deleted and the information e to be reconciled (managing step in S501). Practically, in the cache information 104, the information having the same IDP as the entity to be registered or changed is checked.

Next, the update processing unit 102 determines whether or not there is information e to be reconciled in the cache information 104 (managing step in S502).

When there is the information e (YES in S502), the update processing unit 102 deletes the origin information indicating the entity to be deleted from the origin information of the information e (managing step in S503), and determines whether or not the origin information is blank (S504).

If the origin information about the information e is not blank (NO in S504), the update processing unit 102 returns a successful deletion as a response to the MDR which has issued an update request (S506).

On the other hand, when the origin information about the information e is blank (YES in S504), the update processing unit 102 deletes the information e (S505), and returns a successful deletion as a response to the MDR which has issued an update request (S506).

If there is no information e in step S502 (NO in S502), the update processing unit 102 returns an error response to the MDR which has issued an update request (S507).

Described below is an example of the deleting process. First, an example of the deleting process performed when there are plural pieces of origin information. As illustrated in FIG. 12, when a delete request is issued for the CI 2, the update processing unit 102 determines whether or not there is the same IDP as the CI 2 in the cache information 104. Since there is the same IDP as the CI 2 in the gid 1, the origin information of the CI 2 is deleted in the gid 1.

On the other hand, when there is not plural pieces of origin information, the origin information of the gid 1 becomes blank by deleting the origin information of the CI 1 as illustrated in FIG. 13, the gid 1 is deleted from the cache information 104.

As described above, the F-CMDB 10 according to the present embodiment stores the IDP and the origin information associated with the gid as the cache information 104, thereby realizing the update of the entity without performing the reconciliation.

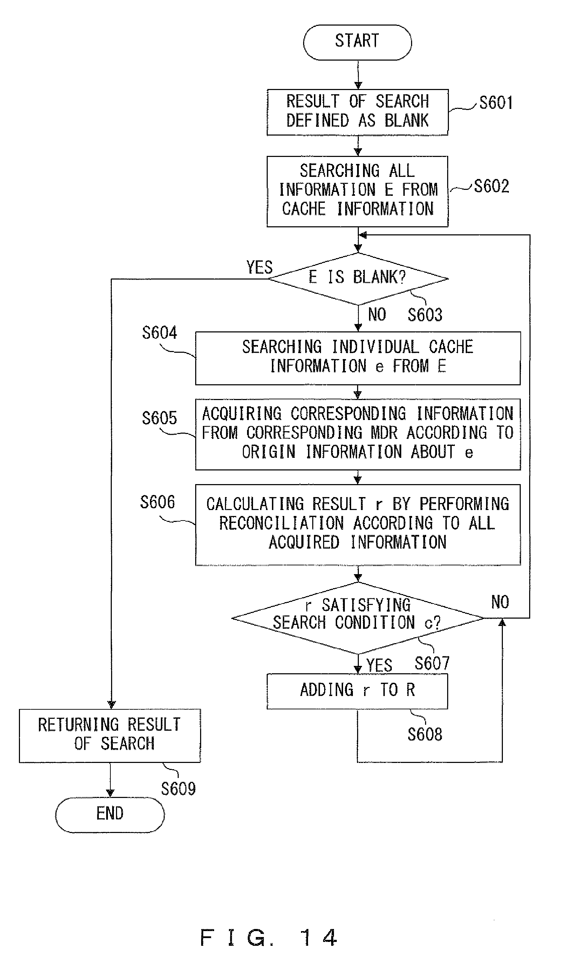

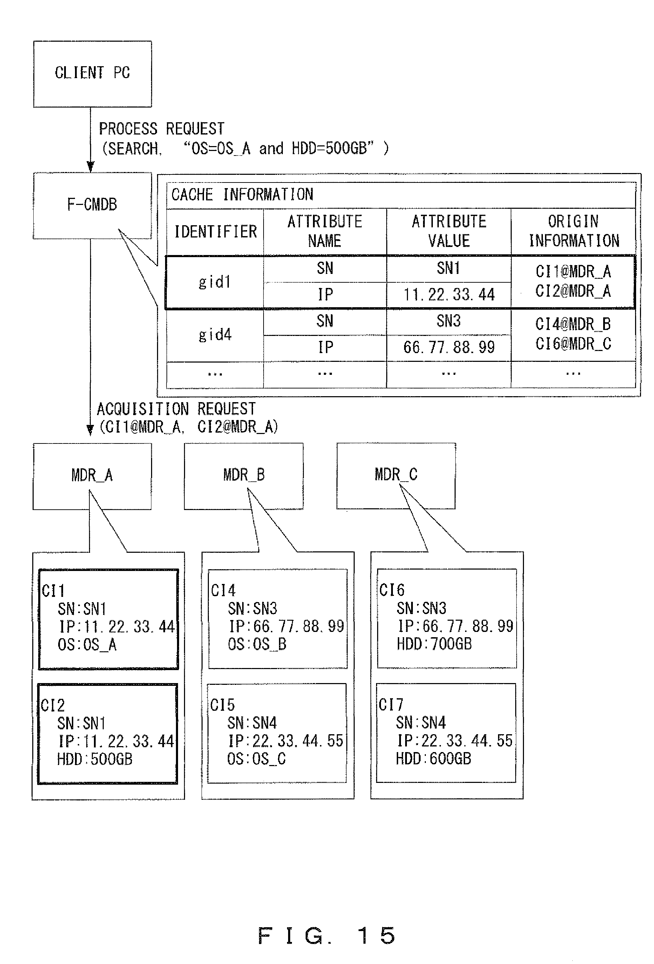

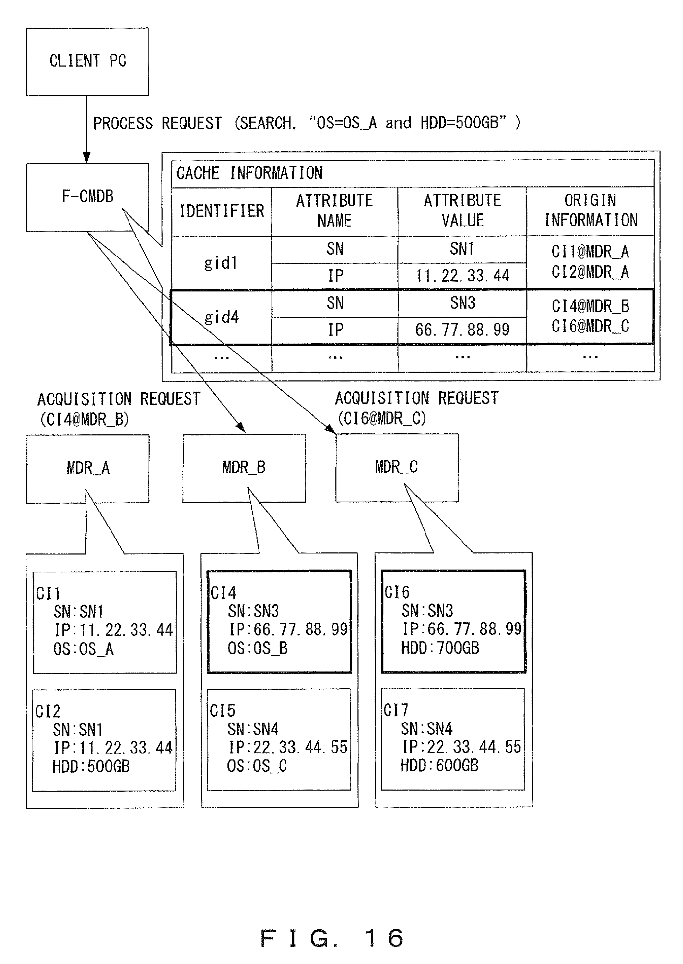

Described next is the operation of the searching process. FIG. 14 is a flowchart of the operation of the searching process. FIG. 15 illustrates the entity satisfying the search condition. FIG. 16 illustrates an entity not satisfying the search condition. In FIG. 14, it is assumed that the searching unit has received a search request from the request processing unit.

First, the search processing unit 103 empties the search request R (S601), takes all information E out of the cache information 104 (S602), and determines whether or not the information E is blank (S603).

If the information is not blank (NO in S603), the search processing unit 103 takes individual cache information e out of the information E (acquiring step/merging step in S604). In this process, the individual cache information e refers to the information associated with one gid.

Next, the search processing unit 103 acquires corresponding information from the corresponding MDR according to the origin information about the information e (acquiring step/merging step in S605). For example, the corresponding information is CI 1 and CI 2 of MDR_A20a in FIG. 15, and CI 4 of MDR_B20b and CI 6 of MDR_C20c in FIG. 16.

Next, the search processing unit 103 performs the reconciliation (merge) according to all acquired information, that is, by the CI associated in the cache information 104, and calculates the result r (merging step in S606). For example, the targets of the reconciliation are CI 1 and CI 2 in FIG. 15, and the result r relating to the resources indicated by the gid 1 has the parameter of OS_A, 500 GB. In FIG. 16, the targets of the reconciliation are CI 4 and CI 6, and the result r about the resources indicated by the gid 2 has the parameter of OS_B, 700 GB. After the calculation of the result r, the F-CMDB 10 determines whether or not the result r of the reconciliation (result of the merge) satisfies the search condition c (determining step in S607).

For example, as illustrated in FIG. 15, when the result r (OS:OS_A, HDD:500 GB) satisfies the search condition ("OS=OS_A and HDD=500 GB") (YES in S607), the search processing unit 103 adds the result r to the search request R (S608), and determines again whether or not the information E is blank (S603).

On the other hand, as illustrated in FIG. 16, when the result r (OS:OS_B, HDD:700 GB) does not satisfy the search condition ("OS=OS_A and HDD=500 GB") (NO in S607), the search processing unit 103 determines again whether or not the information E is blank (S603).

In addition, if the information E is blank in step S603 (YES in S603), the search processing unit 103 returns the search request R as a response to the client PC 30 which has issued a search request through the request processing unit 101 (response step in S609).

As described above, the F-CMDB 10 according to the present embodiment can realize the reduction of the amount of the managed information and a speedup of the reconciliation by narrowing the targets of the reconciliation (the IDP in the present embodiment) in advance. In addition, the F-CMDB 10 can suppress the degradation of the search performance by associating the entity such as the origin information in the cache information 104 in advance, and merging the CIs associated with each other in advance when a searching operation is performed.

### Embodiment 2

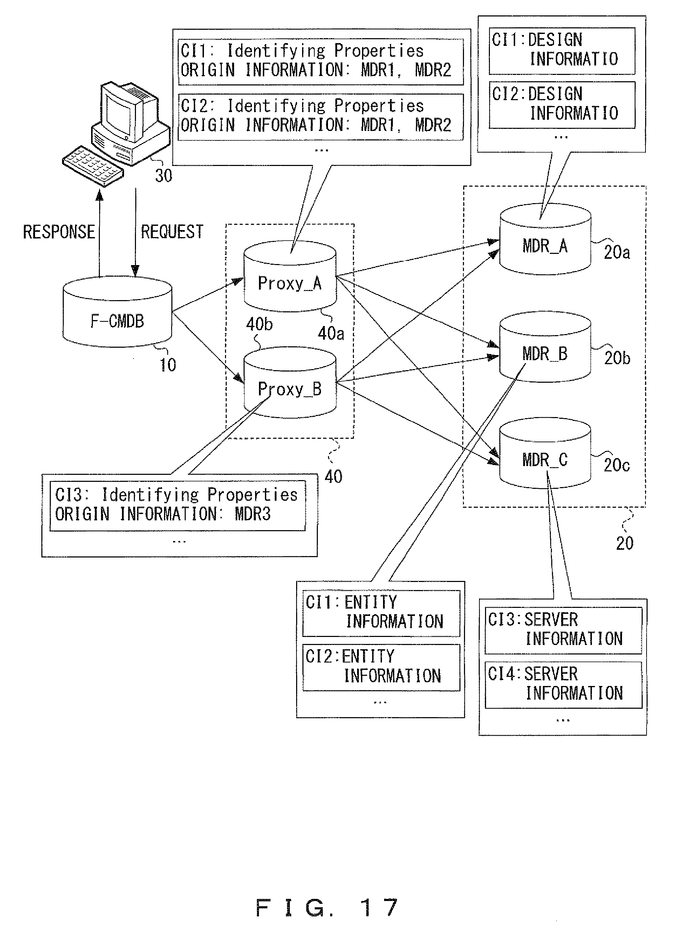

In the embodiment 1 above, the cache information 104 is managed by the F-CMDB 10, but in the present embodiment, the information is distributed and managed using the proxy arranged between the MDR 20 and the F-CMDB 10. The configuration and operation different from those of the embodiment 1 are described below. The descriptions of the same configurations and the operations as in the embodiment 1 are omitted here. First, the configuration of the configuration management system according to the present embodiment is described. FIG. 17 is a configuration of a configuration management system according to the present embodiment.

As illustrated in FIG. 17, the configuration management system according to the present embodiment has a plurality of proxies 40 between the F-CMDB 10 and the plurality of MDRs 20. In the present embodiment, distributing and managing the cache information by the plurality of proxies 40 (proxy 40a, proxy 40b) prevent the cache information from being concentrated on the F-CMDB 10.

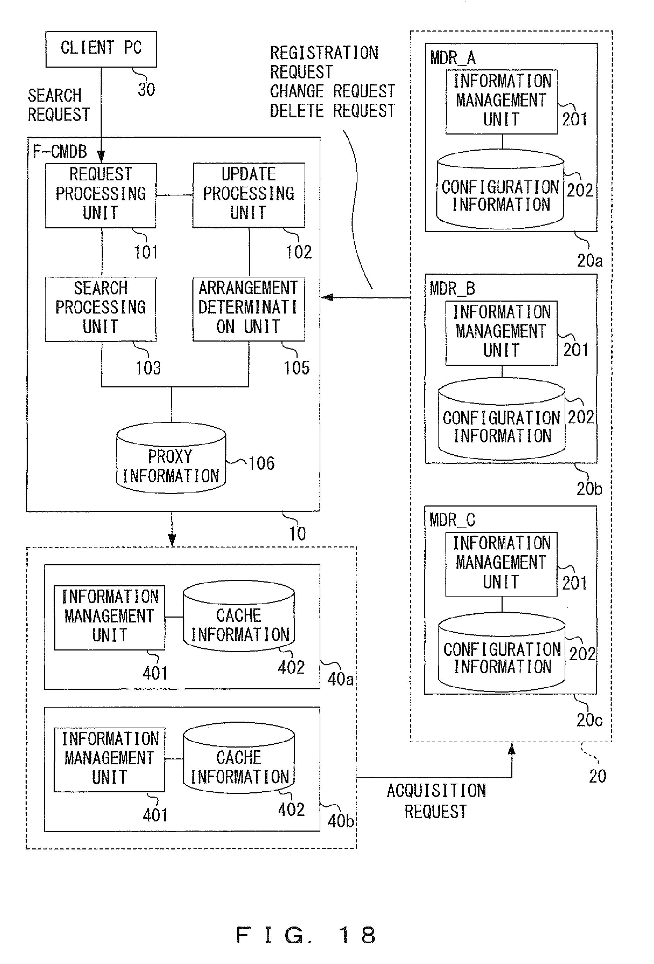

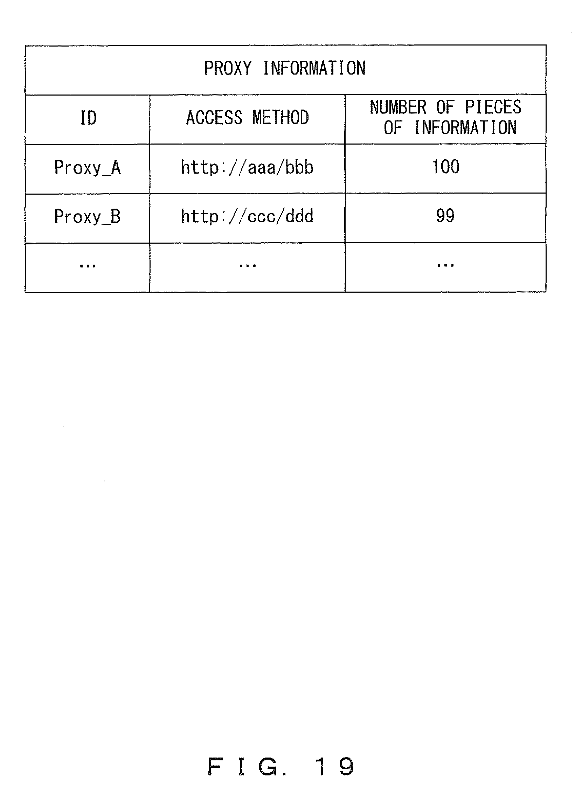

Described next are the configuration of the F-CMDB and the configuration of the proxy different from those according to the embodiment 1. FIG. 18 is a configuration of an F-CMDB, an MDR, and a proxy according to the present embodiment. FIG. 19 illustrates proxy information.

As illustrated in FIG. 18, the embodiment is different from the embodiment 1 in that the F-CMDB 10 includes an arrangement determination unit 105 and a proxy information 106. The arrangement determination unit 105 determines a proxy for registering or adding the origin information indicating the entity for a registration request or a change request in the update requests of the entity. Each of the plurality of proxies 40 includes an information management unit 401 and cache information 402. Since the F-CMDB 10 does not hold cache information, the update processing unit 102 and the search processing unit 103 requests the plurality of proxies 40 to perform the processes (updating process, searching process) allocated by the request processing unit 101. In the update processing unit 102, when any of the plurality of MDRs 20 requests the update of the entity, the arrangement determination unit 105 determines the proxy for registering or adding the origin information indicating the entity. The update processing unit 102 requests the determined proxy to register and add the origin information. The search processing unit 103 merges the results of the search by the plurality of proxies 40, and returns the merged result of the search to the client PC 30 as a response to the search request.

In addition, each of the plurality of proxies 40 includes the cache information 402 and the information management unit 401 for managing the information. The cache information 402 is similar to the proxy information 106 according to the embodiment 1, but is different from the embodiment 1 in that it is distributed and managed. The information management unit 401 performs the process (updating process, searching process) requested by the update processing unit 102 and the search processing unit 103. The information management unit 401 basically acts as a proxy for performing the operations of the search processing unit 103 and the update processing unit 102 according to the embodiment 1.

The proxy information 106 in the F-CMDB 10 includes an "ID" as a unique identifier for a proxy, an "accessing method" indicating the address of each of the plurality of proxies 40, and the number of pieces of information as the number of pieces of information held by each of the plurality of proxies 40 as associated with one another. The number of pieces of information refers to the number of pieces of origin information in the cache information 402 of each of the plurality of proxies 40.

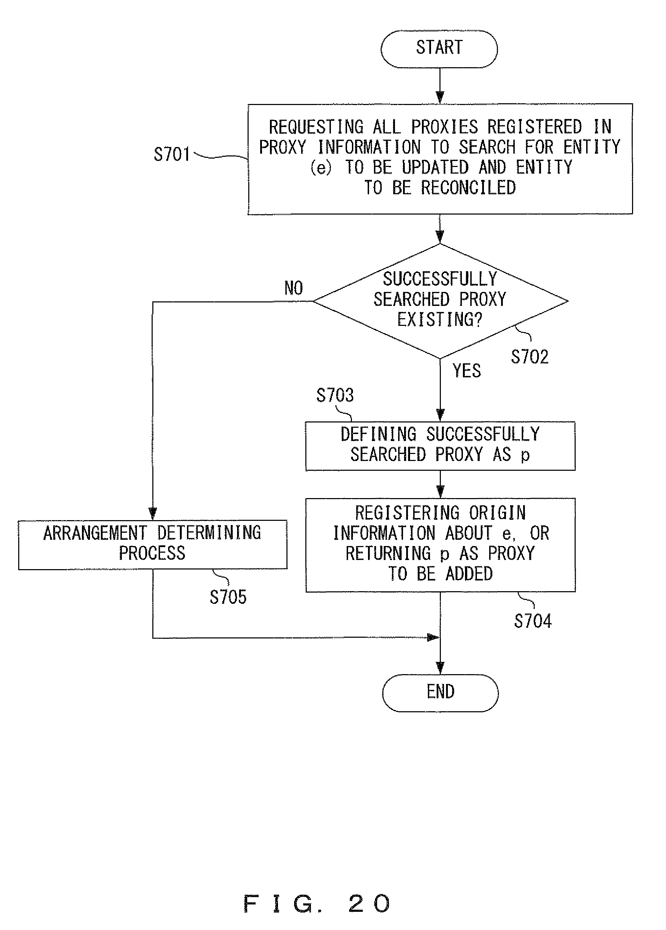

Described next is the operation of the arrangement determination unit. FIG. 20 is a flowchart of the operation of the arrangement determination unit. In the flowchart, it is assumed that the updating unit has already received an update request of an entity, and that the process type of the update request is a registering process or a changing process.

As illustrated in FIG.20, the arrangement determination unit 105 first defines an entity e to be updated for all proxies 40 registered in the proxy information 106, and requests to search for the entity to be reconciled with the entity e (S701). The search is performed by the information management unit 401 of each proxy 40 using the IDP of the entity 6 as an argument. Next, the arrangement determination unit 105 determines whether or not there is a proxy which has successfully performed the search in response to the request (S702). In the determination, the proxy which has successfully performed the search refers to the proxy including a gid having the IDP matching the IDP of the entity e in the cache information 401.

When there is a proxy which has successfully performed the search (YES in S702), the arrangement determination unit 105 defines a proxy p as the proxy which has successfully performed the search, and returns to the update processing unit 102 the proxy p as a proxy for registering or adding the origin information about the entity e (S704).

When there is no proxy which has successfully performed the search (NO in S702), the arrangement determination unit 105 performs the arrangement determining process described later (S705).

As described above, by storing in the information management unit 401 the origin information about the entity to be updated in the proxy 40 in which the information whose IDPs match one another, the origin information relating to the same resources can be associated with the same gid.

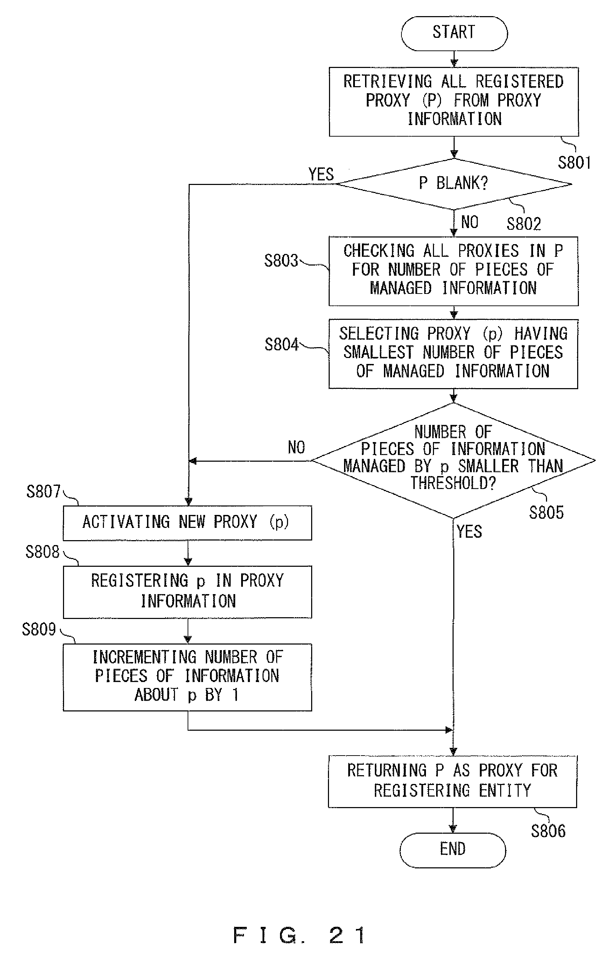

Described next is the arrangement determining process. FIG. 21 is a flowchart of the operation of the arrangement determining process.

As illustrated in FIG. 21, the arrangement determination unit 105 first takes the information about all registered proxies as information P from the proxy information 106 (S801), and determines whether or not the information P is blank (S802).

If the information P is not blank (NO in S802), the arrangement determination unit 105 refers to the proxy information 106, and checks the number of pieces of information managed by each of all proxies 40 in the information P (S802). Next, the arrangement determination unit 105 selects the proxy indicating the minimum number of pieces of information managed by the proxy as p (S804), and determines whether or not the number of pieces of information managed by p is smaller than a threshold (for example, 1000) (S805).

If the number of pieces of information managed by p is smaller than the threshold (YES in S805), the arrangement determination unit 105 returns p as the proxy for registering the origin information about the entity (to be updated in the update request) to the update processing unit 102. (S806).

On the other hand, when the number of pieces of information managed by p is equal to or exceeds the threshold (NO in S805), the arrangement determination unit 105 activates a new proxy not registered in the proxy information 106 as p (S807), and the activated p is registered in the proxy information 106 with the number of pieces of information defined as 0 (S808). Furthermore, the arrangement determination unit 105 increments the number of pieces of information about the registered p by 1 (S809), and returns p as the proxy for registering the entity to the update processing unit 102 (S806).

The update processing unit 102 requests the proxy returned from the arrangement determination unit 105 in the processes illustrated in FIGS. 20 and 21 to register and add the origin information about the entity. When the update request is a delete request, the origin information is deleted by the information management unit 401 performing the same operation as the update processing unit 102 according to the embodiment 1.

As described above, by allowing the proxy having the smallest number of pieces of managed information to register an entity in the plurality of proxies 40, the entity can be evenly allocated to the plurality of proxies 40. In addition, by restricting the number of pieces of information about the cache information 402 in each of the plurality of proxies 40 using a predetermined threshold, each proxy can be prevented from excessively holding information.

The present invention can be embodied in various other modes without deviating from the gist or primary characteristics of the present invention. Therefore, the embodiments described above are only examples in all respects, and cannot be restrictively interpreted. The scope of the present invention is indicated by the scope of the claims for the patent, and is not limited by the descriptions in the specification. Furthermore, all variations, improvements, substitutes, and reforms belonging to the even scope of the claims for the patent are all included in the scope of the present invention.

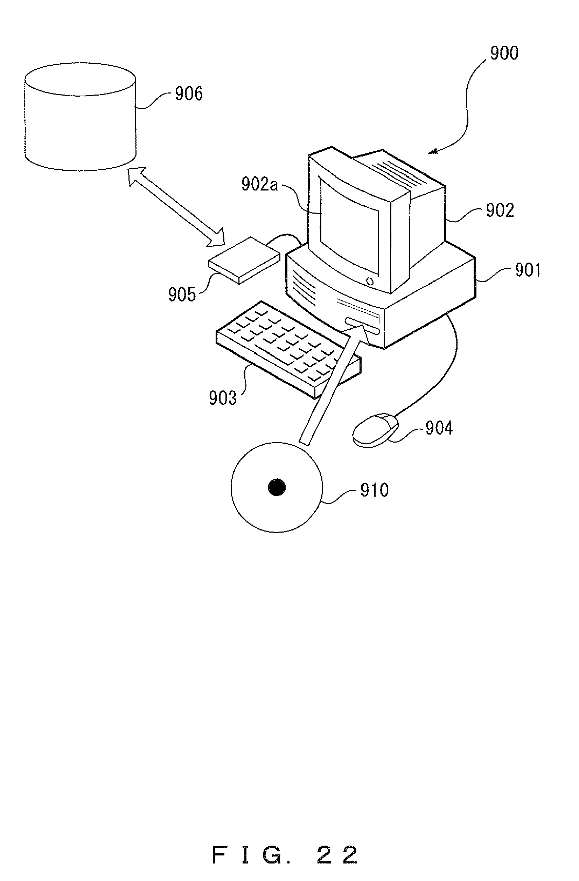

The present invention can be applied in a contents system as described below. FIG. 22 is an example of the computer system according to the present invention. A computer system 900 illustrated in FIG. 22 includes a body unit 901 having a built-in CPU, disk drive, etc., a display 902 for displaying an image at an instruction from the body unit 901, a keyboard 903 for inputting various types of information to the computer system 900, a mouse 904 for specifying any position on the display screen 902a of the display 902, and a communication device 905 for accessing an external database etc. and downloading a program etc. stored in another computer system. The communication device 905 can be a network communication card, a modem, etc.

The above-mentioned program for performing each of the above-mentioned steps in a computer system configuring the F-CMDB 10 can be provided as a configuration management program. The program can be stored in a record medium readable by a computer system, thereby directing the computer system configuring the F-CMDB 10 to execute the program. The program for performing each of the above-mentioned steps is stored in a portable record medium such as a disk 910 etc. or downloaded by the communication device 905 from a record medium 906 of another computer system. In addition, a configuration management program (configuration management software) for assigning at least a configuration managing function to the computer system 900 is input to the computer system 900 and compiled. The program operates the computer system 900 as a configuration management system having the configuration managing function. The program can also be stored in a computer readable record medium such as the disk 910 etc. A record medium readable by the computer system 900 can be an internal storage device internally implemented in the computer such as ROM, RAM, etc., a portable storage medium such as a disc 110. a flexible disk, a DVD disk, a magneto optical disk, an IC card, etc., various types of record media accessible by a computer system connected through a database having a computer program, other database and its database, a communication device such as the arrangement determination unit 105.

### Industrial Applicability

According to the present embodiment, the scalability and the search function can hold together.

## Claims

1. A configuration management device which is able to communicate with a device that manages a plurality of configuration items of a system, the configuration management device comprising:
a management unit associating identification information about the resources included in each of the plurality of configuration items managed by the equipment unit with position information indicating a position of a configuration item including identical identification information as the identification information, and storing associated information as management information in a storage unit;
a search acceptance unit accepting a search request including a search condition;
an acquisition unit acquiring from the equipment unit the configuration item indicated by the position information in the management information when the search request is accepted by the search acceptance unit;
a merge unit merging configuration items associated with the same identification information in the management information for the configuration item acquired by the acquisition unit;
a determination unit determining whether or not a result of the merge by the merge unit satisfies the search condition accepted by the search acceptance unit; and
a response unit returning the result of the merge determined by the determination unit as satisfying the search condition as a response to the search request accepted by the search acceptance unit.

2. The device according to claim 1, further comprising
an update acceptance unit accepting a process request including position information about a configuration item in the equipment unit and process information indicating any process of registration, change, and delete; and
the management unit updates the management information according to the process information and the position information in the process request accepted by the update acceptance unit.

3. The device according to claim 2, wherein
when the process information included in the update request accepted by the update acceptance unit indicates a registration or a change, and the identification information included in the configuration item indicated by the position information included in the update request matches any identification information in the management information, the management unit associates in the management information the position information included in the update request with the identification information matching the identification information included in the configuration item indicated by the position information.

4. The device according to claim 2, wherein
when the process information included in the update request accepted by the update acceptance unit indicates a registration or a change, and the identification information included in the configuration item indicated by the position information included in the update request does not match any identification information in the management information, the management unit associates the position information included in the update request with the identification information about the resources included in the configuration item indicated by the position information, and adds associated information to the management information.

5. The device according to claim 2, wherein
when the process information included in the update request accepted by the update acceptance unit refers to a delete request, the management unit deletes same position information as included in the update request in the management information.

6. A program that causes a computer, which is able to communicate with a device that manages a plurality of configuration items of a system, to perform a process, the process comprising:
a managing step of associating identification information about the resources included in each of the plurality of configuration items managed by the equipment unit with position information indicating a position of a configuration item including identical identification information as the identification information, and storing associated information as management information in a storage unit;
a search accepting step of accepting a search request including a search condition;
an acquiring step of acquiring from the equipment unit the configuration item indicated by the position information in the management information when the search request is accepted in the search accepting step;
a merging step of merging configuration items associated with the same identification information in the management information for the configuration item acquired in the acquiring step;
a determining step of determining whether or not a result of the merge in the merging step satisfies the search condition accepted in the search accepting step; and
a response step of returning the result of the merge determined in the determining step as satisfying the search condition as a response to the search request accepted in the search accepting step.

7. The program according to claim 6, further directing a computer to perform
an update accepting step of accepting a process request including position information about a configuration item in the equipment unit and process information indicating any process of registration, change, and delete, wherein
the managing step updates the management information according to the process information and the position information in the process request accepted in the update accepting step.

8. The program according to claim 7, wherein
when the process information included in the update request accepted in the update accepting step indicates a registration or a change, and the identification information included in the configuration item indicated by the position information included in the update request matches any identification information in the management information, the managing step associates in the management information the position information included in the update request with the identification information matching the identification information included in the configuration item indicated by the position information.

9. The program according to claim 7, wherein
when the process information included in the update request accepted in the update accepting step indicates a registration or a change, and the identification information included in the configuration item indicated by the position information included in the update request does not match any identification information in the management information, the managing step associates the position information included in the update request with the identification information about the resources included in the configuration item indicated by the position information, and adds associated information to the management information.

10. The program according to claim 7, wherein
when the process information included in the update request accepted in the update accepting step refers to a delete request, the managing step deletes same position information as included in the update request in the management information.

11. A configuration managing method used in a device which is able to communicate with a plurality of configuration items of a system, the configuration managing method comprising:
a managing step of associating identification information about the resources included in each of the plurality of configuration items managed by the equipment unit with position information indicating a position of a configuration item including identical identification information as the identification information, and storing associated information as management information in a storage unit;
a search accepting step of accepting a search request including a search condition;
an acquiring step of acquiring from the equipment unit the configuration item indicated by the position information in the management information when the search request is accepted in the search accepting step;
a merging step of merging configuration items associated with the same identification information in the management information for the configuration item acquired in the acquiring step;
a determining step of determining whether or not a result of the merge in the merging step satisfies the search condition accepted in the search accepting step; and
a response step of returning the result of the merge determined in the determining step as satisfying the search condition as a response to the search request accepted in the search accepting step.

12. The method according to claim 11, further comprising
an update accepting step of accepting a process request including position information about a configuration item in the equipment unit and process information indicating any process of registration, change, and delete, wherein
the managing step updates the management information according to the process information and the position information in the process request accepted in the update accepting step.

13. The method according to claim 12, wherein
when the process information included in the update request accepted in the update accepting step indicates a registration or a change, and the identification information included in the configuration item indicated by the position information included in the update request matches any identification information in the management information, the managing step associates in the management information the position information included in the update request with the identification information matching the identification information included in the configuration item indicated by the position information.

14. The method according to claim 12, wherein
when the process information included in the update request accepted in the update accepting step indicates a registration or a change, and the identification information included in the configuration item indicated by the position information included in the update request does not match any identification information in the management information, the managing step associates the position information included in the update request with the identification information about the resources included in the configuration item indicated by the position information, and adds associated information to the management information.

15. The method according to claim 12, wherein
when the process information included in the update request accepted in the update accepting step refers to a delete request, the managing step deletes same position information as included in the update request in the management information.
